# EUROPEAN PATENT APPLICATION

(11) **EP 1 835 741 A1**
(43) Date of publication of application: **19.09.2007**
(21) Application number: 06005070.5
(22) Date of filing: 13.03.2006
(51) Int. Cl.: H04N 7/173

(54) **A method of streaming video data, server apparatus and client apparatus therefor**

(71) Applicant: Axilia SA, 1218 Grand-Saconnex (CH)
(72) Inventor: Wagner, Christophe Andre, 1218 Grand-Saconnex (CH)
(74) Representative: Land, Addick Adrianus Gosling

(57) **Abstract**

The invention contains a method of streaming video data or similar data from a server apparatus (120) to a client apparatus (142), wherein one or more copies of a title of video data are administrated in the server apparatus and stored in the database, wherein data are streamed from the database on request of a client apparatus, wherein during a certain period of time in which streaming takes place only one client apparatus is permitted to access the video data from the stored title of data.

## Description

The present invention relates to a distribution system for streaming films and similar data from a library to one or more end users.

A number of aspects are important for a practical distribution system, of which two major ones are the following: 1) the quality of the image has to be sufficient for a certain data transmission rate, and 2) copying of the video data has to be prevented as much as possible. In addition to these, it is beneficial if the system is scalable and cost efficient.

The present invention provides a method of streaming video data or similar data from a server apparatus to a client apparatus, wherein one or more copies of a title of video data are administrated in the server apparatus and stored in the database, wherein data are streamed from the database on request of a client apparatus, wherein during a certain period of time in which streaming takes place each copy of a title of stored data is permitted to be accessed by only a single client apparatus.

The present invention distinguishes itself from prior art by the server apparatus being organised in such a way that a copy is reserved for a single user (client)at a time, that for a duration, for example during the copy being streamed to an end user, no other user can access the copy. If another user requests the same title, he either has to access another copy of the title, or the other user has to wait until a copy becomes available again. This organisation of the server apparatus facilitates the administration of the fees and royalties to be paid to the owner of the video title.

In a first preferred embodiment the streaming takes place through a set-top box with dedicated hardware and software, so that at the client's side copying can be made very difficult, if not impossible.

In case the client apparatus is a computer or mobile telephone, such apparatus is preferably provided with software which software will be difficult to access and which will prevent the stream video data to leave the operating memory of the apparatus (for example in case of memory swapping by the operating system) so that copying becomes difficult, if not impossible.

In a further preferred embodiment the data transmission rate is limited to one megabit per second, which is normally insufficient to view images with a good quality. The method according to the present invention firstly compresses the video data to a more limited extent than one megabit and then adds pixels on basis of differences between subsequent images and edges around group of pixels so that a good image quality is restored.

The system according to the present invention comprises preferably a library containing digital content such as films, songs or games; a central administration server responsible for distributing digital content to content resellers; a local administration server for each content reseller; one or more content managers per content reseller; one or more content streamers per content manager for locally storing the copies of the titles and streaming copies to end users; and means for displaying content on a screen at the end user.

In the library, digital content such as films are stored. This contents is stored in a compressed and encrypted form. The compression ratio applied to the content is such that it allows transmission at a limited data transmission rate. The compression algorithm according to the present invention and described later realises such compression rate while maintaining enough quality to the human eye.

Content resellers request one or more titles from the central administration server and request one or more copies of each title. The central administration server verifies the credentials of the content reseller. If the credential check of the content reseller is positive, the central administration server fetches the requested titles from the library and transfers the compressed and encrypted content to the content manager of the requesting content reseller.

The content managers at the content reseller prevent that more copies of a title are being streamed to end users than the number of copies the content reseller requested from the central administration server. The titles being available at the content resellers, now can be requested by end users for viewing on a screen, for example a television connected to a set-top box, or a monitor connected to a computer. The request of the end user is send to the administration server at the content reseller. This administration server checks the credentials of the end user, for example identification information such as a subscriber ID and password, available credits for viewing titles.

Upon positive result of the credential check, the administration server checks whether a copy of the requested title is available. If all the copies of the requested title are already being streamed to other end users, the request of the end user will be rejected by the administration server as granting it would mean that the number of copies requested by the content resellers would be exceeded. However, if at least one of the copies of the requested title is not being streamed to any other user, the request is granted, the available copy is assigned to the requesting end user, and the content streamer starts streaming the requested title to the end user. At the end user the received streaming data are being decrypted, decompressed, and being displayed at a screen to enable the end user to view the requested content. At the end user means are present to prevent the decrypted content from leaving the random access memory, thus preventing the end user from storing a copy of the decrypted content in any storage means.

In an alternative embodiment, the client apparatus consists of standard hardware and software. In that case the streaming data is decrypted at the content resellers end.

Further advantages, features and details of the present invention will be elucidated on the basis of the following description of a preferred embodiment thereof, with reference to the annexed figures, wherin:

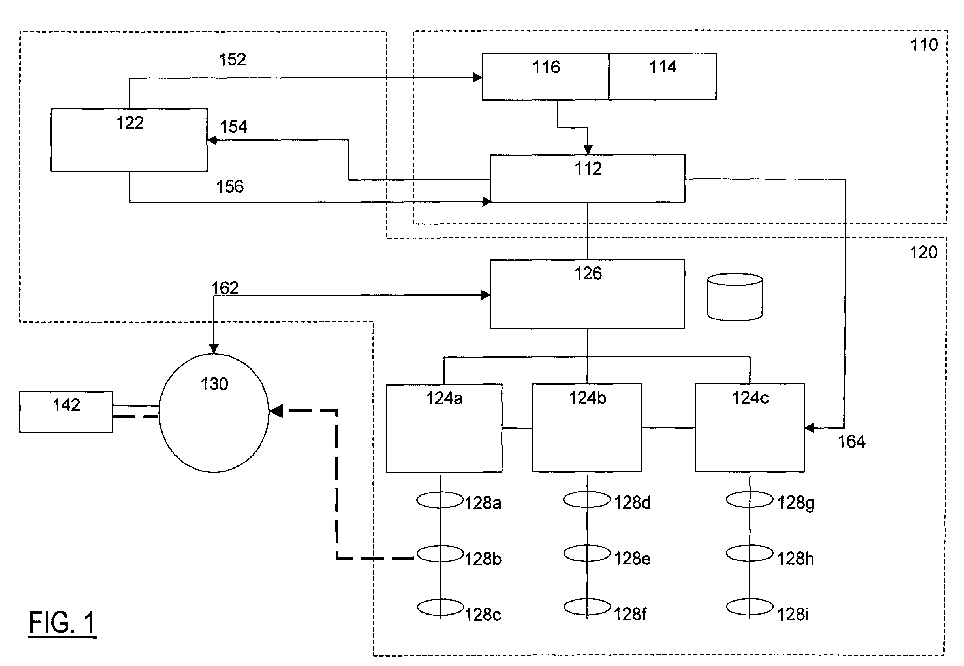

Figure 1 is a diagrammatic view of a first embodiment of the present invention.
Figure 2 shows a flowdiagram of a process of a process of figure 1 requesting a number of copies in the embodiment.
Figure 3 shows a flowdiagram of the process of the end user requesting a title in the embodiment of figure 1.
Figure 4 shows a group of coloured pixels to explain a compression technique to be used in the embodiment of figure 1.
Figure 5 shows the boundary pixels of the group of coloured pixels from figure 4.
Figure 6 shows a group of coloured pixels similar to those in figure 4 among other groups of coloured pixels.
Figure 7 shows the result of the enhancement of the boundary pixels of the group of coloured pixels of figure 6.

A library 114 contains one or more content titles such as films and similar data and is managed by a management server 116. A central administration server 112 manages account data for content resellers 120 and view data of the titles for the purpose of payment of royalties and fees. Additionally, the central administration server 112 is responsible for transferring requested titles from the library 114 to the content resellers 120. The central administration server 112 communicates with one or more content resellers 120. The communication channels are preferably realised through a public world wide network.

A content reseller 120 requests 152 a number of copies of a specified title through an order console 122, that request is processed by the central administration server 112. The validity of the request is evaluated and the order console 122 is informed 154 of either the rejection or the allowage of the request. In case the request was granted, the central administration server 112 retrieves the requested title from the library 114 and transfers 164 the title to the content manager 124 at the content reseller 120. In addition, the requested number of copies for the title is sent to the content manager 124. The content manager 124 prepares the number of copies of the specified title and stores the copy on one or more content streamers 128. The content streamers 128 can store multiple copies and multiple titles. The content streamers are capable of facilitating multiple streams 128 simultaneously. However, one copy in a content streamer 128 will only be streamed to at most one end user 142 during a certain time period.

Preferably, identical copies are stored on different content streamers 128 to realise redundancy. In this way, failure of a content streamer 128 does not necessarily make a title unavailable, it only reduces the number of available copies. Upon failure of a content streamer 128 during the streaming of data, the local administration server 126 can reassign a new (available) copy in another content streamer 128 to an end user 142 receiving streaming data from the failing content streamer 128.

End user 142 is connected through communication network 130 to the content resellers 120, which communication network will preferably be an IP network. An end user 142 sends a request 162 to view a title to the administration server 126 of the content reseller 120. The request 162 contains an identifier for the requested title and a subscriber ID to identify himself, and preferably a pass code to authenticate himself.

The local administration server 126 at the content reseller 120 checks whether the end user 142 is indeed a paying subscriber by comparing the subscriber ID and pass code with information stored in a local database. In a preferred embodiment the local administration server 126 also checks the geographical location of the IP-address of the end user relative to the geographical regions which are allowable for a certain title. If end user 142 is required by his content reseller 120 to have sufficient credits on an account, the credits of the end user 142 is checked in the local storage of local administration server 126. If these checks yield a positive result local administration server 126 checks whether a copy of the requested title is available for streaming to the end user 142. The local administration server 126 ascertains that every copy in the content streamers 128 is streamed to only a single end user 142 at a time. If all copies of the requested title being present in content streamers 128 are unavailable, each occupied by other end users 142, the local administration server 126 will decide negatively on the end user's 142 request for the title.

If a copy of the requested title is available then the local administration server 126 decides positively and assigns the available copy to the end user 142. If the local administration server 126 concludes negatively on one of the previously mentioned checks (subscriber ID, pass code, available credit, availability of a copy of the title), then the local administration server 126 informs 162 the end user 142 that the request has been rejected. In case all the checks ended up positively the end user 142 is informed 162 of the request being granted and the content streamer 128 is requested to start streaming the requested title to the end user 142.

In an alternative embodiment the client apparatus at the end user 142 consists of standard pc hardware with standard pc software. In this embodiment the streaming data is sent unencrypted from the content resellers 120 to the end user 142. Decryption of the content either takes place after the content has been received at the content reseller 120 immediately before the content data are stored in the content streamers 128a-i, which means the content is stored unencrypted.

The data can also be stored encrypted. This means that the data are decrypted on-the-fly by the content streamers 128 while being streamed to the end user 142. In this case the content streamers 128 need to be powerful enough to perform real-time decryption on multiple streams as they can facilitate multiple streams simultaneously.

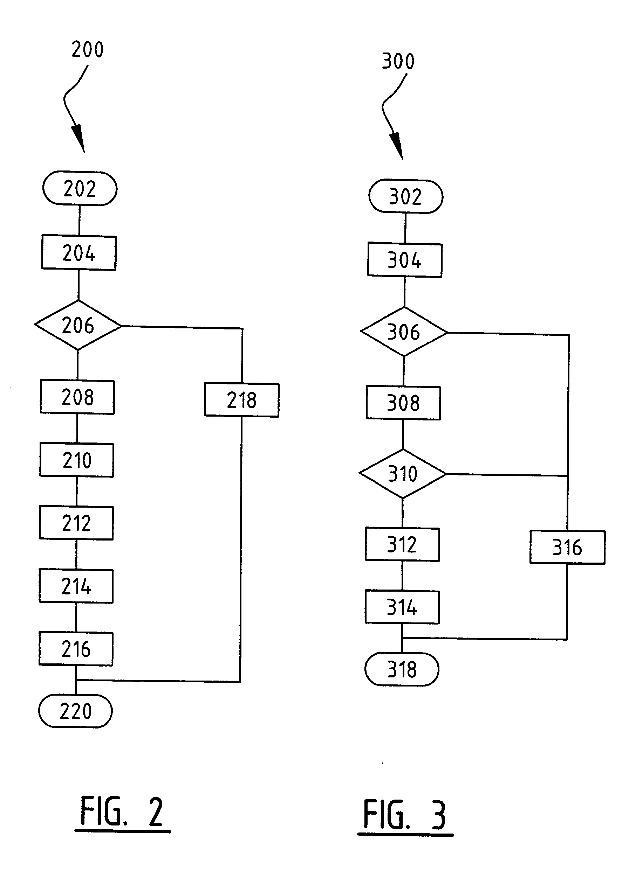

The process 200 in figure 2 of a title being ordered by a content reseller 120 and the title being transferred to the content manager 124 of the content reseller 120 starts in step 202. In step 204 the content reseller 120 sends a request 152 for a number of copies of a particular title (and possibly copies for additional titles) to the central administration server 112, where the request 152 is received. The request 152 might be accompanied by additional information, such as a user identification, identifying the content reseller 120, and an accompanying password, to authenticate the content reseller 120. After reception of the request 152, the validity of the request 152 is assessed in step 206. In this step 206 the availability of the requested title (or titles) is checked. The additionally supplied information, such as user identification and password are also validated. Furthermore, information such as the credit status of the content reseller, blacklisting status, etcetera, can be checked. If any of these checks results in a negative outcome, the process continues with step 218 and a message 154 is sent back from the central administration server 112 to the order console 122 of the content reseller 120 to inform the latter of the rejection of his request 152. The process then finishes in step 220.

If the outcome of the decision in step 206 is positive, the process continues in step 208 where the central administration server 112 sends a message 154 to the order console 122 of the content reseller 120, informing him of the request 152 being granted. Next, the process retrieves the requested title (or titles) in step 210. In step 212 the central administration server 112 transfers 164 the compressed and encrypted title to the content manager 124 of the content reseller 120.

In the alternative embodiment with standard pc hardware and software at the customer's end and the titles being stored unencrypted at the content reseller's content streamer 128, the process includes optional step 214 where the received content is decrypted again.

In step 216, after the title has been received at a content manager 124 (and possibly been decrypted), the content managers 124 copy the title as often as requested by the content reseller 120 during ordering of the title and distribute the copies over content streamers 128 with storage available for the title. The process ends in step 220.

The process 300 in figure 3 of an end user 142 requesting a title from a content reseller starts in step 302. In step 304 the end user sends a request 162 for a particular title to the local administration server 126 of the content reseller 120. The request 162 might contain additional data, such as a subscriber identification and a password for authentication. The local administration server 126 validates the request 162 by running a couple of checks in step 306. The local administration server 126 checks the validity of the subscriber identification, the correctness of the corresponding password, and the credit status of the end user 142. If any of these checks fail, the process continues in step 316 where a message 162 signalling the rejection of the request is being sent from the local administration server 126 to the end user 142. Next, the process finishes in final step 318.

However, if all the checks in step 306 are passed, the process continues in step 308, where the local administration server 126 checks whether a copy of the requested title is available. This means that the local administration server 126 checks whether there is any copy of the requested title, that is not being streamed to an end user 142. If a copy is available, it is assigned to the end user 142. If not, no assignment is made. In step 310 the positive outcome of the previous step 308 is assessed. If the assignment failed, the process continues in step 316, where the end user 142 is informed 162 of the request being rejected.

If the outcome of the assignment in step 308 was positive, the process continues after step 310 with step 312. In this step the end user 142 is informed 162 of the request being granted. Then, in step 314 the content streamer 128 starts streaming the assigned title to the end user 142.

At the end user's end the reception and displaying of the streaming data can be done by a set-top box with dedicated hardware and software, which set-top box provides a video signal to a television set. In another embodiment the client apparatus is a personal computer or mobile telephone provided with software to receive and display the streaming data. In a preferred embodiment such software is implemented as a dedicated stand-alone software product for receiving encrypted streaming data as provided by the present invention and displaying the data. The software is then preferably designed to be difficult to access and to prevent the streaming data from leaving the operating memory for example by preventing the operating system from swapping the memory areas holding the streaming data to an external storage.

In another embodiment it is implemented as a plug-in module for common wide-spread media players. In the case of a stand-alone software product it will be more difficult to illegally store a copy of the streamed title, but the latter allows for easier acceptance by end users.

In an embodiment showing even more easy end user acceptance the streaming data are provided in the format of well known Media Players.

Compression of the digital content takes place before or during the process of storing the content in the library 114. In a first step, the digital content is compressed by a conventional lossy compression technique as known by a person skilled in the art. The compression rate is set more aggressively than the available data transmission rate between the content streamers 128 and the end user 142 require. The data transmission rate required to transfer this compressed signal is therefore significantly below the available data transmission rate in the communication channel between the content streamer 128 and the end user 142 allowing for the insertion of additional information in the signal to improve the perceived quality of the image to the human eye without exceeding the available data transmission rate. In a preferred embodiment the available data transfer rate is 1 megabit per second. In that embodiment, the content is initially compressed to such that it would be transferrable at a data transfer rate of 700 kilobits per second.

Due to the lossy nature of the compression algorithm employed, some of the detail in the image has been lost and areas of likewise coloured pixels might have turned into areas of similarly or even equally coloured pixels and edges between likely coloured areas might have become more pronounced than in the original image. In a second step, the perceived quality of the image is increased by adding information, due to the manipulation of boundary pixels between differently coloured areas. This is done in five sub-steps, all the operations being performed on either the frames themselves or on the differential frames, meaning that only the difference between the pixel values in two successive frames are used. So the following references to either the actual pixel colour and pixel intensity, or only to changes in colour and intensity in the actual pixel frames.

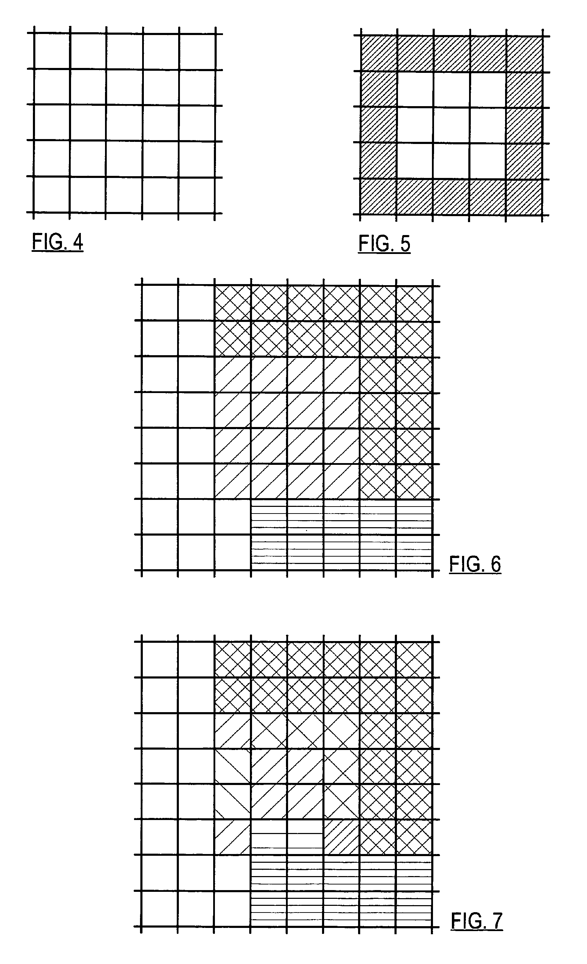

The compression process (figures 4-7) involves the following steps:
a) The regeneration algorithm scans the compressed image for groups of similarly coloured pixels. Only groups with more than nine pixels are used when groups of similarly coloured pixels are processed to enhance the image. (See figure 4.)
b) Within the group of similarly coloured pixels (see figure 6), the pixels forming the boundary of the group are being selected (figure 5). In this preferred embodiment of the present invention the width of the boundary of the group of pixels is one pixel wide, but in other embodiments the width can be chosen to be wider than one pixel.
c) A new colour and new intensity is then calculated for the boundary pixels, by means of a weighted average function of the surrounding pixels outside the group of pixels. The weight factors can be based on the distance of the pixel to the boundary pixel, the colour of the pixel, and the speed of colour or intensity change of the pixel and the boundary pixel compared to previous or subsequent frames. In addition to the weighted average function, the shape and size of the group of similarly coloured pixels might be considered to calculate the new value of the boundary pixel.
d) In this embodiment the regeneration algorithm applies an individually determined colour and intensity as described in c) to each boundary pixel of the group of similarly coloured pixels (see figure 7); it is however also possible that a single colour and intensity is determined for all boundary pixels of the group of similarly coloured pixels, for example the average of the individually calculated new colours and intensities.
e) For each group of similarly coloured pixels the difference is assessed between the group and the same group of similarly coloured pixels in a number of previous frames and a number of subsequent frames. The sub-steps a till d are repeated proportionally to the total difference found, the resulting frame of the previous iteration being fed as input frame into the new iteration.

In a further step, the algorithm replaces frames with either the previous or the following frame, depending on the differences between the two frames, that is the number of pixels having the same colour and intensity.

While embodiments of this invention are illustrated and disclosed, these embodiments should not be construed to limit the claims. It is anticipated that various modifications and alternative designs may be made without departing from the scope of this invention.

## Claims

1. A method of streaming video data or similar data from a server apparatus to a client apparatus, wherein one or more copies of a title of video data are administrated in the server apparatus and stored in the database, wherein data are streamed from the database on request of a client apparatus, wherein during a certain period of time in which streaming takes place only one client apparatus is permitted to access the video data from the stored title of data.

2. A method according to claim 1, wherein the client apparatus comprises a set-top box including dedicated hardware and/or software for receiving the streamed data and to a screen.

3. A method according to claim 1, wherein the client apparatus is a personal computer, laptop or mobile device, comprising software for streaming the data and for preventing the data leaving the operating memory of the client apparatus.

4. A method according to claim 1, 2 or 3, wherein the data are compressed for streaming with a limited data transmission rate.

5. A method according to claim 4, wherein the data transmission rate is limited to about 0.5 - 1.5 megabit per second (Mbps) preferably about 1 megabit per second.

6. A method according to any of the preceding claims, wherein firstly video data are compressed to a data transmission rate smaller than the data transmission rate permitted for streaming data and wherein secondly information is added to improve the image quality.

7. A method according to claim 6, wherein the added information is based upon using groups of pixels in frames or differential frames with the same colours and intensities where the number of pixels in a group is larger than the a predetermined number such as nine, and wherein pixels on the edge of the groups of pixels are recalculated such that a new colour and intensity for the edge group pixels are based upon the colour and intensity of the group pixels and the surrounding pixels.

8. A method according to any of claims 1-7, wherein the server apparatus includes two or more stored copies of a title of video data.

9. Server apparatus for method of streaming video data or similar data to a client apparatus, comprising two or more content managers each managing one or more hard disks on which titles of video data are stored.

10. Server apparatus according to claim 9, provided with an administration server connected to the content managers.

11. Server apparatus according to claim 9 or 10, provided with a second administration server connected over relatively large distances to the first administration server, said second administration server also being connected to a management server and/or library.
